# EUROPEAN PATENT SPECIFICATION

(11) **EP 1 919 785 B1**
(45) Date of publication and mention of the grant of the patent: **02.01.2013**
(21) Application number: 06765388.1
(22) Date of filing: 22.06.2006
(51) Int. Cl.: B65D 8/00, B65D 21/02

(54) **COMBINATION OF AN EXTRACTION TOOL AND A COMPLEX TRAY WITH REUSABLE PARTS**
KOMBINATION EINES EXTRAKTIONWERKZEUGS UND EINER KOMPLEXEN SCHALE MIT WIEDERVERWENDBAREN TEILEN
COMBINAISON D'UN OUTIL D'EXTRACTION ET D'UN PLATEAU COMPLEXE DOTE DE PARTIES REUTILISABLES

(30) Priority: 29.06.2005 GR 20050100327
(43) Date of publication of application: 14.05.2008
(73) Proprietor: TSAMOURGELIS, Ilias, 112 54 Athens (GR)
(72) Inventor: TSAMOURGELIS, Ilias, 112 54 Athens (GR)
(86) International application number: PCT/GR2006/000029
(87) International publication number: WO 2007/000616

(56) References cited:
- US-A- 3 915 372
- US-A- 3 941 300

## Description

The invention refers to a combination of an extraction tool and a complex tray with reusable parts which is useful for the packaging and transport of agricultural and industrial products.

Until today, the corrugated board trays that are used for the packaging and transport of agricultural and industrial products are both attractive and recyclable but are costly, the wooden trays create problems regarding their collection after use and the folding or non-folding plastic trays which are washed and re-used do not have the user's trade name stamped on them.

US-3,915,372 discloses a rectangular, paperboard container constructed from a single blank of corrugated paperboard that is folded to form the container with a bottom wall and four side walls, a pair of reinforcing plastic end frames being thereafter fitted onto a pair of opposite paperboard side walls, which are thereby stiffened. Such structure with the reinforcing plastic end frames being formed with a handle means facilitates transport and enables the weight of a stack of containers to be transferred through these plastic end frames rather than through any paperboard portions thereof. Whilst representing a complex container assembled with a combination of paperboard and plastic frames, the container in US-3,915,372 is made in its entirety from a single blank of corrugated paperboard with the pair of reinforcing plastic end frames being additional elements.

US-3,941,300 proposes a folded plastic container with snap lid, which is made from three separate pieces of plastic in a rectangular form, two of these peices being formed pieces which snap fit into a sheet plastic portion. Whilst such a container enjoys the property of being easily assembled, it however cannot be dissambled without applying appropriate external forces, substantially greater than the forces required to assemble it.

A complex tray in accordance with US-3,915,372 is described in the preamble of claim 1.

The advantage of this invention is that the complex tray is composed of paper (either corrugated board or solid) or another material that may be slotted thus forming the two opposite sides and the base of the tray, and the remaining sides are constructed from a molten material (polypropylene, polyethylene, etc). These materials are connected to each other without glue or staples. Following use, this complex tray may be disassembled in various ways, one of which is described below and the molten parts are washed, disinfected and reused while the other paper part may be recycled. The constructed complex tray is exceptionally durable, attractive, the user's trade name is promoted, it is ecological and the packaging cost is significantly reduced.

In the following description, reference is made to trays 40X60 cm which are combined to trays 30X40 cm both of which fulfill the specifications of the euro-palette having dimensions 80X120 cm. Further to this, trays in these dimensions are combined to each other in order to form a pile when they are placed on top of each other. The description made refer either to one quarter or half of the tray for purposes of symmetry.
Figure 1 shows the parts which compose the complex tray being part of the invention, in the case which the molten parts are the large sides of the tray while the expansion of the corrugated board or solid paper is cut and slotted accordingly, so that with suitable folding it may be fitted into the grooves existing in the molten sides.
Figure 2 shows an aspect of the complex tray being part of the invention.
Figure 3 shows a pile consisting of complex trays in 40X60 cm and 30X40 cm dimensions being part of the invention.
Figure 4 shows the tool-extractor for the removal of the paper parts of the complex tray following use, being part of the invention.
Figure 5 shows the molten sides of the complex trays adjoined so as to be transported for re-use.

### Applications of the invention are described below

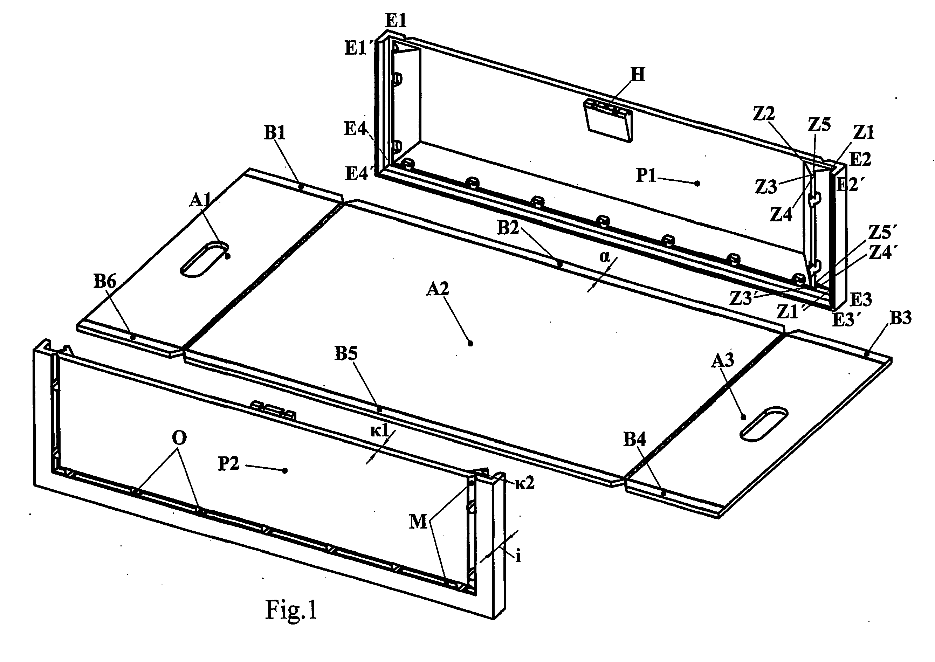

Figure 1 shows the surface of the corrugated board or solid paper or any other material that can be slotted, which can be cut and slotted according to this in such a way as to form sides A1, A3 of the complex tray, the base A2, the extensions B1,B2,B3,B4,B5,B6, having a length of a can be folded internally up to 180°. It also shows the molten sides P1, P2 which consist of a flat surface E1E2E3E4 having a thickness of k1, the vertical surfaces to this E1E4E4'E1', E2E3E3'E2'and E4E3E3'E4' having a thickness of k2 and a length i>k1, the vertical columns with a horizontal section Z1Z2Z3Z4Z5 where the Z1Z5 with the Z4Z5 form an angle less or equal to 135°, the Z1Z5 with the ElE2 form an angle less or equal to 90°, the distance of point Z1 from the internal side of the surface E2E3E3'E2' is equal or longer than the thickness of the corrugated board, the distance of point Z4 from the same surface is not smaller than the double thickness of the corrugated board and the length Z1Z5 is equal or a little longer than a. The vertical columns at the bottom, are connected to each other with a bar which has the same shape with them and is in the same distance from the internal side of the surface E4E3E3'E4'. At the external side of the surface E4E3E3'E4', in a distance equal or longer than k1 from the straight line E3E4 and equal or longer than k2 from the straight lines E3E3' and E4E4' there is a few millimeter projection while the top of the vertical columns is in a distance from the upper part of the complex tray equal to the projection, so that the projections prevent the slides of the trays when each complex tray is placed on top of the other forming a pile.

Further to this, at the large sides P1,P2 of the 40X60 cm. complex trays, there is a projection H internally and in the middle, so as the molten sides of the 30X40 cm complex trays which are placed on top of them to be properly supported. According to the use, at the sides P1, P2, gaps and grooves are created in order to economize on material and the packed products in the complex trays to be ventilated, as well as hand holds. Along the vertical columns and the bar there are openings O of different shapes which are useful for the disassembly of the complex tray as well as a groove M, having a depth of a few millimeters, so that the edge Z3Z3' of the one molten side to get into the groove of the other in order not to slide during their mass transport. According to this invention, sides A1 and A3 of the complex tray rotate internally at an angle of 90° towards the A2 base and the B1, B2, B3, B4, B5, B6 internal extensions till they are folded. Then P1 and P2 properly forced are placed in a way that the above mentioned sides together with the extensions B1, B2, B3 and B4, B5, B6 accordingly, enter the grooves which are created between the surfaces E1, E4, E4', E1' E2, E3, E3', E2' E4, E3, E3', E4' and the vertical columns as well as the bar connecting them. Upon entering each of the extensions B1, B2, B3, B4, B5, B6 tends to rotate in the opposite direction and returns to its former position automatically, but this motion stops on the surface Z1, Z1', Z5', Z5 and are trapped by the surface Z5, Z5', Z4', Z4 so that the complex tray is finally formed.

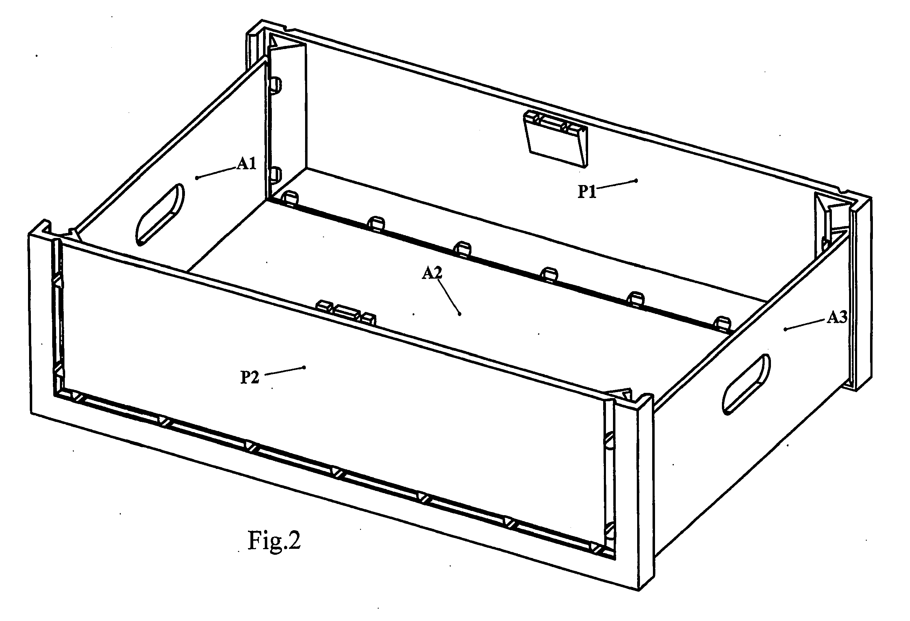

Figure 2 according to the invention shows the complex tray which is formed with the folding of the corrugated board which is cut and slotted accordingly to figure 1 and the molten sides which are connected to the corrugated board in the way shown in this figure.

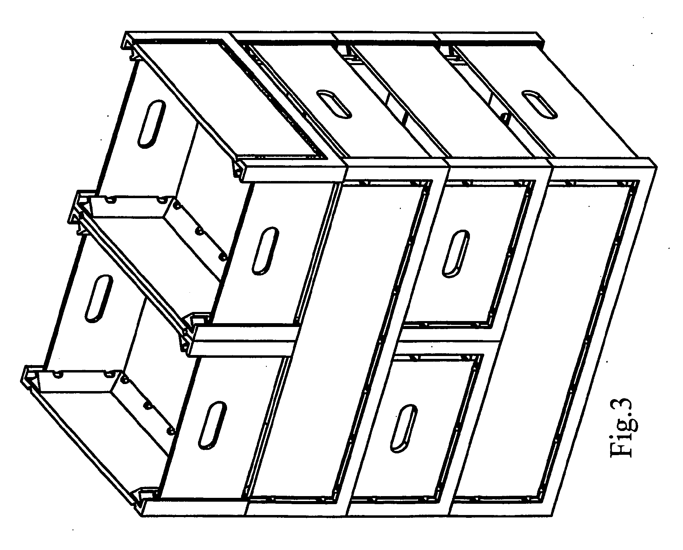

Figure 3 according to the invention, shows a pile which is comprised of complex trays in case that the molten sides are either the large or the small sides and the way they can be placed - one on top of the other - when their dimensions are 40 X 60 cm and 30 X 40 cm which are the usual dimensions of trays today, based on the dimensions of the 80 X 120 cm. Euro-palette.

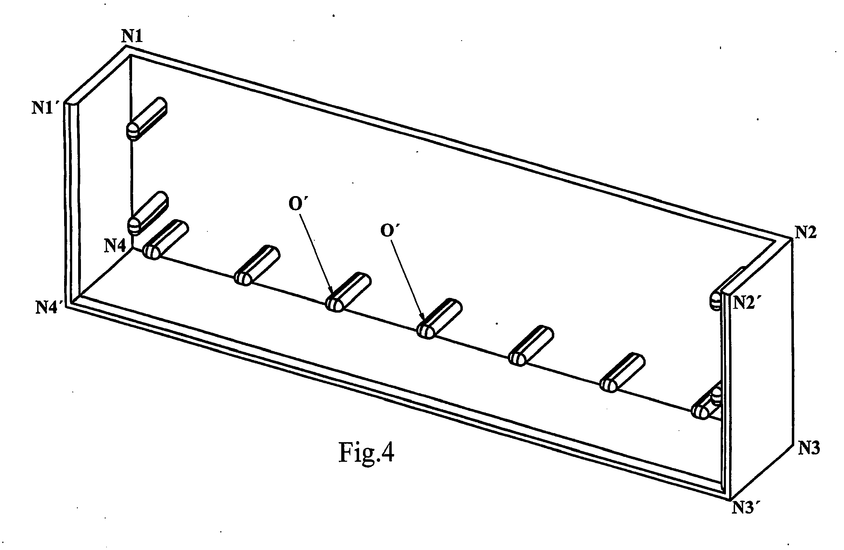

Figure 4 according to the invention shows the extraction-tool which enters the molten side of the complex tray and separates the molten parts from the paper ones. In this case, this extraction-tool is comprised of the flat surface N1, N2, N3, N4 and the surfaces vertical to this, N1, N4, N4', N1', N4, N3, N3', N4' and N2, N3, N3', N2' of a certain thickness, as well as of the extractors O' of the same shape with openings O, having a diameter or perimeter equal or less than that of the openings O, whose length is longer than i. For the disassembly of the complex tray, the molten sides are placed into the extraction-tool so as the extractors O' enter into the openings O thus achieving the folding of B1, B2, B3, B4, B5, B6 and following the reverse of the process used to form the complex tray, the corrugated board or solid paper is pushed outwards from the molten sides P1 and P2.

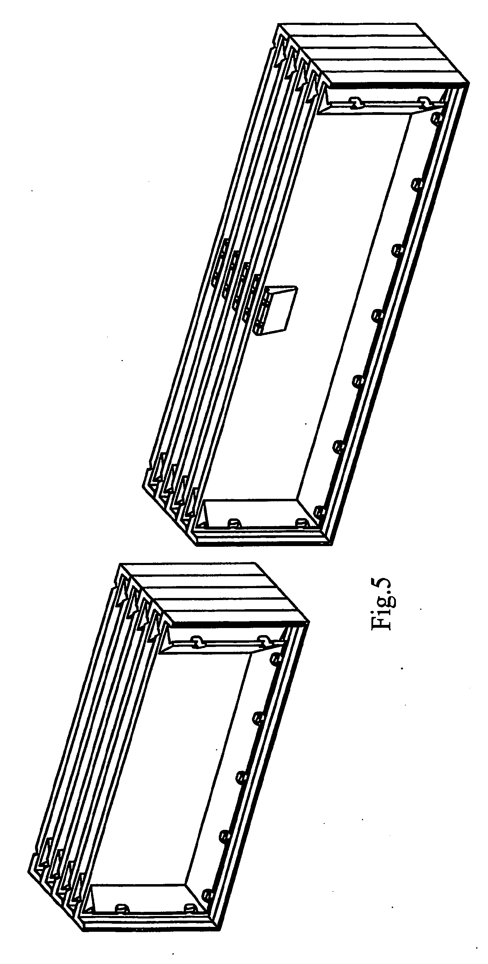

Figure 5 in accordance with the invention, shows the molten sides of the complex tray, attached to each other and are transported for reuse. The existing grooves M, having a depth of a few millimeters, allow the transport of the molten sides without them sliding since the edges Z3, Z3' enter the grooves M thus economizing on space.

## Claims

1. A combination of an extraction tool and a complex tray with reusable parts for the packaging and transport of agricultural and industrial products being composed of corrugated board or solid paper or of any other material that can be slotted that forms two opposite sides and the base of the tray, the remaining sides being constructed from a molten material, wherein the surface of the corrugated board or solid paper or of any other material that can be slotted is cut and slotted so as to form the sides (A1), (A3), the base (A2) the molten sides (P1), (P2) are consisting of a flat surface (E1E2E3E4) having a thickness of (k1), the surfaces vertical to this (E1E4E4'E1'), (E2E3E3'E2') and (E4E3E3'E4') having a thickness of (k2) and a length of i>k1 **characterized by** said sides (A1, A3) and said base (A2) incorporating extensions (B1, B2, B3, B4, B5, B6) having a length (a) which can be folded internally up to an angle of 180°, the vertical columns with a horizontal section (Z1Z2Z3Z4Z5) where line (Z1Z5) with line (Z4Z5) forms an angle less or equal to 135°, line (Z5Z1) with line (E1E2) forms an angle less or equal to 90°, the distance of point (Z1) from the internal side of the surface (E2E3E3'E2') is equal or longer than the thickness of the corrugated board or solid paper, the distance of point (Z4) from the same surface is not less than the double thickness of the corrugated board or solid paper and the length of line (Z1Z5) is equal or a little longer than (a), the vertical columns at the bottom being connected to each other with a bar of the same shape that has the same distance from the internal side of the surface (E4E3E3'E4'), wherein the sides (A1) and (A3) rotate internally 90° towards the base (A2) and then the extensions (B1), (B2), (B3), (B4), (B5), (B6) also internally until they are folded while the molten sides (P1) and (P2) are placed in a way that the above mentioned sides together with the extensions (B1), (B2), (B3) and the extensions (B4), (B5), (B6) respectively enter the grooves that are formed between the surfaces (E1E4E4'E1'), (E2E3E3'E2'), (E4E3E3'E4') and the vertical columns as well as the bar connecting them, so that following entry each of the extensions (B1), (B2), (B3), (B4), (B5), (B6) tends to return to its former position and consequently to be stopped by the surface (Z1Z1'Z5'Z5) and to be trapped by the surface (Z5Z5'Z4'Z4), wherein openings (O) having different geometrical shapes which are useful for the disassembly of the complex tray are provided at the surface (E1E2E3E4) and along the vertical columns and the bar, an extraction-tool being provided for the separation of the molten sides from the paper sides, said extraction tool being attached at the surface (E1E2E3E4) and comprises the flat surface (N1N2N3N4) with the surfaces (N1N4N4'N1'), (N4N3N3'N4'), and (N2N3N3'N2') vertical to this and the extractors (O') of a shape similar to the openings (O) but of a smaller perimeter than these, whose length is longer than (i), said extractors (O') entering the openings (O) thus achieving the folding of (B1), (B2), (B3), (B4), (B5), (B6) and following the reverse process than the one followed to form the complex tray and the corrugated board is pushed out of the molten sides (P1) and (P2), said molten sides (P1) and (P2) thereafter being washed, disinfected and transported for reuse, whilst the paper part may be recycled.

2. A complex tray with reusable parts according to claim 1, which is **characterized by** the fact that the vertical columns together with the bar connecting them is a separate molten part which is fixed to the surface (E1E2E3E4) so that when it is removed the disassembly of the complex tray is achieved.

3. A complex tray with reusable parts according to claims I and 2, which is **characterized by** the fact that the surfaces (E1E4E4'E1'), (E2E3E3'E2'), (E4E3E3'E4') and (E1E2E2'E1') form a framework which is a separate molten part which is fixed to the surface (E1E2E3E4) so that when it is removed the disassembly of the complex tray is achieved.

4. A complex tray with reusable parts according to claims 1, 2 and 3, which is **characterized by** the fact that at the large molten sides (P1), (P2), internally there are one or more projections (H) so that the molten sides of the complex trays or other kinds of trays, smaller but of multiple dimensions, which are placed on top of them, to be properly supported.

5. A complex tray with reusable parts according to claims 1, 2, 3 and 4, which is **characterized by** the fact that at the external side of the surface (E1E2E3E4) and along the vertical columns and the bar there is a groove (M), so that the edge (Z3Z3') of the one side enters the groove (M) of the other one during their transport.

## Patentansprüche

1. Eine Kombination eines Extraktionwerkzeugs und einer komplexen Schale mit wiederverwendbaren Teilen für das Verpacken und den Transport von Land -und industriellen Produkten, **dadurch gekennzeichnet daß** sie aus einem wellenförmigen Karton oder einem kompakten Papier oder aus irgendeinem anderen Material besteht, an denen Schlitze geschafft werden können, welcher zwei gegenüberliegenden Seiten und die Basis der Schale bildet, wobei die übrigen Seiten aus einem geschmolzenen Material erzeugt werden, wo die Oberfläche des wellenförmigen Kartons oder des kompakten Papiers oder des irgendeinen anderen Materiales an denen Schlitze geschafft werden können, geschnitten wird und in Schlitzen gebildet, damit die Seiten (A1), (A3) die Basis (A2) gebildet werden können, wobei die geschmolzene Seiten (P1), (P2) aus einer ebenen Oberfläche (E1E2E3E4) bestehen, die eine Dicke (k1) hat, die Oberflächen vertikal zu der (E1E4E4'E1'), (E2E3E3'E2') und (E4E3E3'E4') liegen, die eine Dicke (k2) und eine Länge i>k1 haben, wo die besagten Seiten (A1, A3) und die besagte Basis (A2) Erweiterungen (B1,B2,B3,B4,B5,B6) einbeziehen, die eine Länge (a) haben und welche nach innen bis 180° Winkel gefaltet werden können, die vertikale Säulen mit horizontalem Querschnitt (Z1Z2A3Z4Z5), wo die Leine (Z1Z5) mit der Leine (Z4Z5) einen Winkel kleiner oder gleich der 135° bilden, die Leine (Z5Z1) mit der Leine (E1E2) einen Winkel kleiner oder gleich der 90° bilden, der Abstand des Punktes (Z1) von der inneren Seite der Oberfläche (E2E3E3'E2') gleich oder größer von der Dicke des wellenförmigen Kartons oder des Kompakten Papiers ist, der Abstand des Punktes (Z4) von der selben Oberfläche ist nicht kleiner von der doppelten Dicke des wellenförmigen Kartons oder des kompakten Papiers und die Länge der Leine (Z1Z5) ist gleich oder ein wenig größer von (a), wo die vertikale Säulen verbinden sich miteinander am Boden mit einer Stange von gleicher Form, die den gleichen Abstand von der inneren Seite der Oberfläche (E4E3E3'E4') hat, wobei die Seiten (A1) und (A3) drehen sich nach innen etwa 90° zu der Basis (A2) und weithin die Erweiterungen (B1), (B2), (B3), (B4), (B5), (B6) drehen sich ebenfalls nach innen bis sie gefaltet werden, während die geschmolzene Seiten (P1) und (P2) so gestellt werden, daß die obenerwähnten Seiten zusammen mit den Erweiterungen (B1), (B2), (B3) und den Erweiterungen (B4), (B5), (B6) auf den entsprechenden Rillen eingehen werden, die zwischen der Oberflächen (E1E4E4'E1'), (E2E3E3'E2'), (E4E3E3'E4') und der vertikalen Säulen gebildet werden, sowohl auch und die Stange, die sie verbindet, so daß nach ihren Eintritt, jede von den Erweiterungen (B1), (B2), (B3), (B4), (B5), (B6) zu der vorherigen Position zurückkehrt, infolgedessen wird von der Oberfläche (Z1Z1'Z5'Z5) aufgehalten und von der Oberfläche (Z5Z5'Z4'Z4) gefangen, wo in der Oberfläche (E1E2E3E4) und entlang der vertikalen Säulen und der Stange werden Öffnungen (O) vorgesehen, die verschiedene geometrische Formen haben, die nützlich für das Abmontieren der komplexen Schale sind, wobei ein Extrakionwerkzeug für die Trennung der geschmolzenen Seiten von den Papierseiten vorgesehen wird, wobei das besagte Extrakionwerkzeug an der Oberfläche (E1E2E3E4) angeschlossen wird und enthält die ebene Oberfläche (N1N2N3N4) mit den vertikalen zu der Oberflächen (N1N4N4'N1), (N4N3N3'N4'), und (N2N3N3'N2') und den Extraktionen (O') mit einer Form gleich mit der der Öffnungen (O) aber mit kleinerem Umkreis von dem der Öffnungen, deren die Länge größer von dem (i) ist, wobei die besagten Extraktionen (O') auf die Öffnungen (O) eingehen, um das Falten der (B1), (B2), (B3), (B4), (B5), (B6) zu erreichen und es wird das umgekehrtes Verfahren gefolgt von dem, daß gefolgt wird, um die komplexe Schale zu bilden, der wellenförmige Karton wird außerhalb der geschmolzenen Seiten (P1) und (P2) geschoben, wo die besagten geschmolzenen Seiten (P1) und (P2) weithin gewaschen, desinfiziert und transportiert werden, damit sie wiederverwendet werden und gleichzeitig der Papierteil kann wiederverwertet werden.

2. Eine komplexe Schale mit wiederverwendbaren Teilen nach dem Anspruch 1, **dadurch gekennzeichnet daß** die vertikale Säulen mit der Stange, die sie verbindet ist ein separater geschmolzener Teil, welcher an die Oberfläche (E1E2E3E4) befestigt wird, so daß wenn er abgezogen wird, die komplexe Schale abmontiert werden kann.

3. Eine komplexe Schale mit wiederverwendbaren Teilen nach den Ansprüchen 1 und 2, **dadurch gekennzeichnet daß** die Oberflächen (E1E4E4'E1'), (E2E3E3'E2'), (E4E3E3'E4') und (E1E2E2'El') einen Rahmen bilden, welcher ein separater geschmolzener Teil ist, der an die Oberfläche (E1E2E3E4) befestigt wird, so daß wenn er abgezogen wird, die komplexe Schale abmontiert werden kann.

4. Eine komplexe Schale mit wiederverwendbaren Teilen nach den Ansprüchen 1, 2 und 3 **dadurch gekennzeichnet daß** in den großen geschmolzenen Seiten (P1), (P2) im inneren eine oder mehrere Erweiterungen (H) vorgesehen sind, so daß die geschmolzene Seiten der komplexen Schalen oder anderer kleineren Sorten, aber von vielfältigen Schalen-Dimensionen, die über denen gestellt werden, passend gestützt werden.

5. Eine komplexe Schale mit wiederverwendbaren Teilen nach den Ansprüchen 1, 2, 3 und 4 **dadurch gekennzeichnet daß** in der Außenseite der Oberfläche (E1E2E3E4) und entlang der vertikalen Säulen und der Stange eine Rille (M) vorgesehen ist, so dass die Spitze (Z3Z3') von der einen Seite auf die Rille (M) der anderen Seiten während deren Transport eingehen werden kann.

## Revendications

1. Combinaison d'un outil d'extraction et d'un plateau complexe doté de parties réutilisables pour l'emballage et le transport de produits agricoles et industriels **caractérisé en ce qu'**il est composé de carton ondulé ou de papier solide ou de tout autre matériau qui peut être fendue qui forme deux côtés opposés et la base du plateau, les côtés restants étant construits à partir d'un matériau en fusion, dans lequel la surface du carton ondulé ou du papier solide ou de tout autre matériau qui peut être fendue est découpée et fendu de telle manière à former les côtés (A1), ( A3), ladite base (A2), les côtés en fusion (P1), (P2) sont constitués par une surface plane (E1E2E3E4) ayant une épaisseur de (k1), les surfaces verticales de celui-ci (E1E4E4'E1'), (E2E3E3'E2') et (E4E3E3'E4') ayant une épaisseur de (k2) et une longueur de i> k1, lesdits côtés (A1, A3) et ladite base (A2) comportant des prolongements (B1, B2, B3, B4, B5, B6) ayant une longueur (a) qui peut être plié à l'intérieur jusqu'à un angle de 180°, les colonnes verticales avec une section horizontale (Z1Z2Z3Z4Z5) dans lequel la ligne (Z1Z5) avec la ligne (Z4Z5) forment un angle inférieur ou égal à 135°, la ligne (Z5Z1) avec la ligne (E1E2) forment un angle inférieur ou égal à 90°, la distance du point (Z1) du côté intérieur de la surface (E2E3E3'E2') est égale ou supérieure à l'épaisseur du carton ondulé ou du papier solide, la distance du point (Z4) à partir de la même surface n'est pas moins de la double épaisseur du carton ondulé ou du papier solide et la longueur de la ligne (Z1Z5) est égale ou un peu plus que (a), les colonnes verticales dans la partie inférieure étant reliées l'une à l'autre par une barre de la même forme qui présente la même distance du côté interne de la surface (E4E3E3'E4'), dans lequel les côtés (A1) et (A3) tournent à l'intérieur avec une angle de 90° vers la base (A2) et ensuite les prolongements (B1), (B2), (B3), (B4), (B5), (B6) également à l'intérieur jusqu'à ce qu'ils sont pliés tandis que les côtés en fusion (P1) et (P2) sont disposés de telle manière que les côtés mentionnés ci-dessus ainsi que les prolongements (B1), (B2), (B3) et les prolongements (B4), (B5), (B6), respectivement entre les rainures qui sont formées entre les surfaces (E1E4E4'E1'), (E2E3E3'E2'), (E4E3E3'E4') et les colonnes verticales ainsi que la barre de liaison entre eux, de telle manière que après l'entrée de chacun des prolongements (B1), (B2), (B3), (B4), (B5), (B6) tend à revenir à sa position initiale et donc y être arrêté par la surface (Z1Z1'Z5'Z5') et à être retenus par la surface (Z5Z5'Z4'Z4), dans lequel les ouvertures (O) ayant des formes géométriques différentes qui sont utiles pour le démontage du plateau complexe sont fournies à la surface (E1E2E3E4) et le long des colonnes verticales et de la barre, un outil d'extraction étant fourni pour la séparation des parties en fusion des côtés du papier, ledit outil d'extraction étant attaché à la surface (E1E2E3E4) et comporte la surface plane (N1N2N3N4) avec les surfaces (N1N4N4'N1'), (N4N3N3'N4') et (N2N3N3'N2') vertical à celui-ci et aux extracteurs (O') d'une forme similaire à celle des ouvertures (O) mais d'un périmètre plus petit que ceux-ci, dont la longueur est supérieure à (i), lesdits extracteurs (O') entrant dans les ouvertures (O) réalisant ainsi le pliage de (B1), (B2), (B3), (B4), (B5), (B6) et en suivant le processus inverse de celui suivi pour former le plateau complexe et le carton ondulé est poussé dehors les côtés en fusion (P1) et (P2), lesdits côtés en fusion (P1) et (P2) étant ensuite lavé, désinfecté et transportées pour réutilisation, tandis que la partie du papier peut être recyclé.

2. Un plateau complexe avec des parties réutilisables selon la revendication 1, qui est **caractérisé par le fait que** les colonnes verticales avec la barre qui les relie est une pièce en fusion séparée qui est fixé à la surface (E1E2E3E4) de telle manière que lorsqu'il est retiré le démontage du plateau complexe est effectué.

3. Un plateau complexe avec des parties réutilisables selon les revendications 1 et 2, qui est **caractérisé par le fait que** les surfaces (E1E4E4'E1'), (E2E3E3'E2'), (E4E3E3'E4') et (E1E2E2'E1') forment un cadre qui est une partie en fusion séparée qui est fixé à la surface (E1E2E3E4) de telle manière que lorsqu'il est retiré le démontage du plateau complexe est effectué.

4. Un plateau complexe avec des parties réutilisables selon les revendications 1, 2 et 3, qui est **caractérisé par le fait que** aux grands côtés en fusion (P1), (P2), à l'intérieur il y a une ou plusieurs projections (H) de telle manière que le côtés en fusion des plateaux complexes ou d'autres types de plateaux, plus petites, mais de dimensions multiples, qui sont placés au-dessus d'eux, d'être proprement soutenus.

5. Un plateau complexe avec des parties réutilisables selon les revendications 1, 2, 3 et 4, qui est **caractérisé par le fait que** sur le côté extérieur de la surface (E1E2E3E4) et le long des colonnes verticales et la barre il y a une rainure (M), de telle manière que le bord (Z3Z3') de l'une côté entre la rainure (M) de l'autre pendant leur transport.
